# EUROPEAN PATENT APPLICATION

(11) **EP 1 772 321 A2**
(43) Date of publication of application: **11.04.2007**
(21) Application number: 07001383.4
(22) Date of filing: 31.01.2003
(51) Int. Cl.: B60R 21/01, B60R 21/00

(54) **Method of identifying and tracking objects**

(30) Priority: 02.02.2002 GB 0202502; 02.02.2002 GB 0202504; 02.02.2002 GB 0202501; 02.02.2002 GB 0202503
(62) Divisional of application: 03702719.0
(71) Applicant: QinetiQ Limited, London, SW1E 6PD (GB)
(72) Inventor: Kaushal, Tej Paul QuinetiQ Limited, Malvern Worcestershire WR14 3PS (GB)
(74) Representative: Davies, Philip

(57) **Abstract**

A method of identifying objects of interest within a scene from an image thereof, the method comprising the steps of; taking a current image of the scene I_{now} using an imager; calculating a difference image I_{diff} between the current image of the scene I_{now} and a reference image I_{ref}, the difference image I_{diff} comprising a plurality of image pixels each having an intensity level; determining an optimum noise level in the difference image I_{diff} and setting a noise threshold Tₙ above said optimum noise level; and comparing the magnitude of the intensity level of each pixel within the difference image I_{diff} with the noise level Tₙ and providing a binary mask image Iₘₐₛₖ which labels continuous areas of pixels (blobs) in the image as either object or background.

## Description

This invention relates to a method of identifying objects of interest within an image of a scene. The method may be used particularly, although not exclusively, in a head position sensor in a vehicle such as an automobile in conjunction with controls for deployment of safety restraint airbags, and more generally with a sensor array for other imaging and detection systems.

Automotive safety restraint airbag systems are currently deployed without knowledge of whether there is an occupant in the seat, or the position of their head. Legislation is likely to impose a requirement for occupant position sensing. Technologies being investigated include visible band cameras with illumination to work at night, capacitive sensors, acoustic sensors, and so on. The ideal system would be a system like a visible band camera but without illumination, and costing under US$20.

Without limitation, the present method may be used to solve the problem of determining a driver's (or other car occupant's) position by the use of a thermal imaging system together with processing to determine the position of the driver's head in relation to one or more of the airbags present in the vehicle. Thermal imaging, operating in the 3-14µm wavelength band, uses the natural body radiation for detection without the need of illumination unlike conventional near infrared imaging. Thermal sensors are passive and are not confused by lighting conditions and can work in total darkness.

Other sensing techniques are active and emit radiation of one form or another, e.g. ultrasonic beams, electromagnetic waves, near infrared light. See for example EP-1167126A2 which employs infrared emitters to illuminate a person and track head position using facial feature image sensing; US-6270116-B1 uses an ultrasonic or electromagnetic or infrared emitter and appropriate sensors to detect a person's position; US-6254127-B1 employs an ultrasonic or capacitance system within a steering wheel to locate position; US-5691693 uses at least 3 capacitive sensors to detect head position and motion; US-5785347 emits a plurality of infrared beams to determine location and position of a seat occupant; US-6324453-B1 transmits electromagnetic waves into the passenger compartment.

Other prior art also specifies using multiple sensors per vehicle occupant, e.g. US-5330226, which uses an ultrasonic and infrared system together.

Techniques employing passive thermal infrared approaches are given in DE-19822850 and JP-20011296184.

Patent DE-19822850 specifies the collection of a thermal image from the frontal aspect to generate a head and shoulders portrait type image of the occupant, and use two temperature thresholds to classify portions of the image as head or body. This system does not provide information on proximity to a frontal airbag and may require a calibrated sensor able to measure absolute temperatures. Unfortunately, such a system would only work when the interior of the car is cool. On warm or hot days, the interior temperatures within the car may easily exceed skin temperatures.

Patent JP-20011296184 describes a temperature compensation technique using a sensing element which does not receive thermal radiation from the scene. This masked element senses on the substrate temperature of the sensor chip and thus forms a reference against which changes in scene temperature can be measured. This is required to make a system which can measure absolute temperature in the scene more accurately, and is helpful for controlling heating and air conditioning. The patent does not describe an invention that enables the compensated sensor to undertake the task of occupant position sensing.

The present patent application describes a method and a sensor system capable of providing an occupant position sensing capability using a passive, thermal infrared camera. The sensor described does not quantify temperature as JP-20011296184, and does not use temperature thresholds as DE-19822850. It also uses a single sensor per occupant, unlike US-5330226.

It is an object of the invention to provide an alternative object identification method, and in particular a method of tracking at least one object of interest within a scene so as to provide information to control safety airbags in a vehicle having controls for deployment of such safety airbags.

According to one aspect of this invention, there is now provided a method of identifying objects of interest within a scene from an image thereof as described in claim 1.

Such a method may be used in a head position sensor comprising, an array of infra red detectors, a lens system, and processing means for determining the position of a driver's head from the collective outputs of the detectors, all contained in an integral package.

Advantageously, the method of the present invention could be used in a head position sensor comprising,
an array of thermal infra red detectors,
a lens system for imaging a seat occupant and a location of at least one airbag,
a processor for determining the existence of an occupant in a seat and the position of the occupants head relative to at least one airbag from a thermal image on the array,

Preferably, the detector array and processor are integral.

The detector array may be an x, y array of detector elements where x and y are in the range 24 to 96 inclusive, preferably about 32 or 64.

The sensor may also be used to control associated airbags, i.e. control the timing and/or amount of inflation following an accident. The sensor may be used to switch ON airbags only when a seat is occupied; normally an airbag remains in an ON state irrespective of whether or not a seat, driver or passenger, is occupied which may results in e.g. a passenger airbag being deployed even in the absence of a passenger. The sensor may also be used to keep in an OFF-state a passenger airbag when a seat is occupied by e.g. a child or baby seat, or luggage.

The sensor may be mounted in the "A" pillar adjacent a driver's head, or mounted near the central light cluster. A wide angle lens is used e.g. about 90° to 120° so that an occupants head and airbag location are within the field of view.

The processing means may include means for detecting a driver's head using shape information. For example by convolving circularly symmetric filters with selected portions of the thermal image.

The processing means may also determine a seat occupants body mass by counting the area of image, alone or conjunction with a weight sensor in a seat. Such information may then be used together with head position to control the amount of inflation of an airbag.

Additional sensors may be provided for other occupants of the vehicle. For example a second sensor may be located at the extreme nearside of the vehicle dashboard to detect a front seat passenger, both occupancy and position. Also sensors may be mounted in the "B-pillar" or roof to detect rear seat passengers and to control associated airbags.

The distance between the head and either the frontal or side airbags can be calculated from a single sensor image by locating head and airbag positions within a single image, and directly estimating their separation. If multiple sensors are used then triangulation and stereo matching may also be used in addition.

According to another aspect of this invention, there is now provided a method of tracking at least one object of interest within a scene as described in claim 9.

According to a further aspect of this invention, there is now provided a head position sensor for use in a vehicle in conjunction with controls for deployment of safety restrain airbags as described in claim 9.

One form of the invention will now be described, by way of example only, with reference to the accompanying drawings in which: -
Figure 1 shows a schematic plan view of a vehicle;
Figure 2 shows relative positions of a driver's head, side and front airbags within the image;
Figure 3 shows images A to F of thermal scenes of the inside of a warm vehicle, first image A without a driver, then image B with a driver, and images C to F the various steps taken in processing the image B to locate and measure head position relative to an airbag in a steering wheel;
Figure 4 shows a first algorithm for processing the outputs from each detector in an array of detectors;
Figures 5-7 show a sequence of thermal images of a room with a person entering the room;
Figure 8 shows the image of Figure 7 after threshold processing;
Figure 9 shows the image of Figure 7 after image differencing processing;
Figure 10 shows a partly processed image which is the difference between a reference image and a current image;
Figure 11 shows a processed image where noise has been thresholded out and the resulting mask used to key a current image;
Figure 12 shows a second algorithm for processing the outputs from each detector in an array of detectors;
Figure 13 shows a schematic plan view of an array of detectors with associated circuitry;
Figure 14 shows a sectional view of part of Figure 13;
Figure 15 shows a schematic diagram with connections to each detector;
Figure 16 is view of a scene taken with a 2 x 2 detector array;
Figure 17 is view of a scene taken with a 4 x 4 detector array;
Figure 18 is view of a scene taken with an 8 x 8 detector array;
Figure 19 is view of a scene taken with a 16 x 16 detector array;
Figure 20 is view of a scene taken with a 32 x 32 detector array;
Figure 21 is view of a scene taken with a 64 x 64 detector array;
Figure 22 is view of a scene taken with a 128 x 128 detector array; and
Figure 23 Is view of a scene taken with a 256 x 256 detector array;

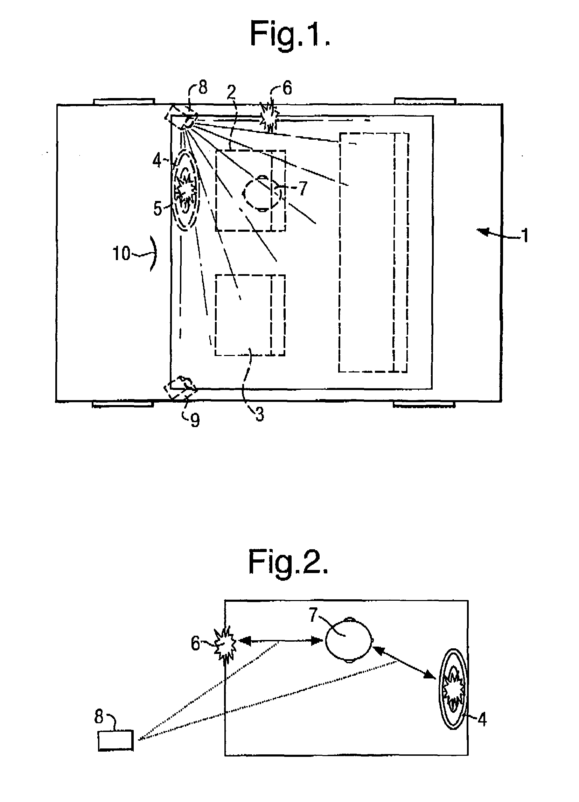

As seen in Figure 1 a vehicle 1 has a driver's seat 2, a front passenger seat 3, and a steering wheel 4. A front airbag 5 is mounted inside the steering wheel 4, and a side airbag 6 is located at the side of the vehicle adjacent the driver's seat. A driver's head is indicated at 7.

A thermal imaging sensor 8 is located in the vehicle's A pillar in front of and to the side of the driver's seat. An alternative position for the imaging sensor is in the centre of the vehicle 1 by its rear view mirror. This imaging sensor 8 has a wide angle lens to cover about 90° field of view, to include driver 7 the steering wheel 4 and the side of the vehicle.

Additional sensors 9 may be placed on the nearside A pillar to cover a front seat passenger. The sensors 8, 9 may located at the rear view mirror 10 if measurement of proximity of occupants to side airbag is not required.

In a car at normal temperature, e.g. 22 degrees Celsius, a driver or passenger appears much warmer - skin temperatures measuring typically 32 degrees Celsius. Under equilibrium conditions clothing will be at a temperature within this range, e.g. 27 degrees Celsius.

It is therefore possible to use simple grey level thresholding algorithms to define the part of the image that corresponds to the car, clothes and skin, see prior art ZEXEL (DE19933850).

In practise this is not so,easily done as often the car can be warmer than the occupants if it has been parked in the sun or at temperatures very close to skin temperature simply from the greenhouse effect of the car windows raising the internal temperature, even on a doudy day.

As a warm car cools down there is a point at which the average temperature of the occupant equals the average temperature of the car.

Under this condition, a thermal camera needs to have enough spatial resolution to be able to distinguish cooler and warmer patches within the scene and enough thermal resolution to sense the small temperature differences. A simple threshold based algorithm is unlikely to work satisfactorily.

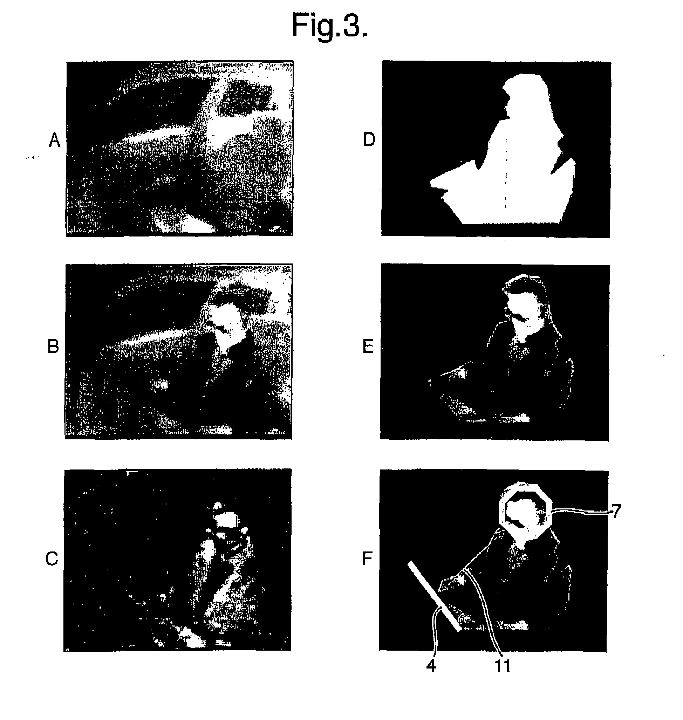

Figure 3 image A shows a thermal image of a driver's seat in a vehicle. In this case the sensor was located in the centre of the dashboard. It is not an ideal position, but serves to indicate the detailed information available from a thermal sensor. Processing the thermal image, as noted below, assumes the sensor is placed as shown in Figures 1, 2 in an A pillar.

As the occupant 7 and airbag locations 5, 6 are contained in the image, any image based calculation compensates for adjustment of steering rake/reach and seat position made by different drivers.

In some embodiments it is desirable to ignore the outputs of some detectors in the array. For example processing of other car occupants or parts of the car may need to be excluded. In this case the sensor may be programmed to ignore some of the detectors in the array outputs during processing of the thermal images. By this means, a standard wide angle view sensor 8 may be tailored to cover a more restrictive area without the need for physical masking of lens, sensor position adjustment or changing components.

Figure 3 image A shows a car interior at an average radiometric temperature of approximately 32 degrees Celsius, and image B shows the car with an occupant in the driver's seat. The algorithms described in the prior art will not be able to segment out the occupant as his clothes are cooler than the car. It may be possible to segment the head, but other warmer areas of the car will interfere and the result will be very poor.

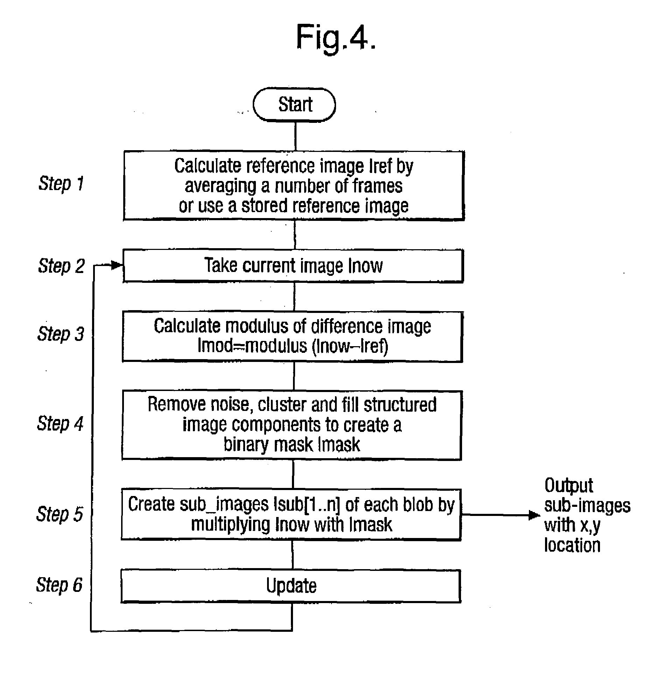

The algorithm described with reference to Figure 4 first calculates the modulus of the difference between the background image A and occupied image B. Image A may be captured as the car is being unlocked, for example.

The result, C, is a structured image showing a ghostly image of the occupant in a noisy background.

Structure based segmentation techniques (such as morphological and filtering operations) can then be employed to remove noise and cluster the occupant into a single entity. A mask is generated by this process which simply defines the area within the image where the occupant is believed to be, and this is shown in image D.

Calculations such as body size can be based on this mask image alone, but more information can be made available by multiplying this binary mask with the source image B to generate a cut-out, image E, of the occupant.

Thresholding techniques may now be used to identify the head without hot background objects interfering, but this will only work well if the occupant is clothed. A better approach is to first estimate body mass from the size of the mask in image D and then define a fraction of the size, e.g. 1/8 to be apportioned to the head, and so search for a circular object of this size at the upper portion of the masked image E.

The frontal airbag location (steering wheel or dash board for a front seat passenger) can also easily be found using a phase approach looking for extended image features within a given orientation range and position. Alternatively, this position, if fixed can be pre-programmed into the sensor.

The results are shown in image F where an octagon has been used to mark the head 7 position, a thick line indicates the steering wheel 4 position and a thin line 11 gauges the distance between the head and the airbag within the steering wheel.

A simple multiplier can then be used to convert the distance in image pixels to an estimate of real distance in the car.

This estimate can be improved by further estimating variation of the distance from the sensor to the head by monitoring apparent expansion/contraction of the head size in the image as the head moves towards and away from the wide field-of-view sensor.

This direct form of measurement from within the image by identifying the occupant, his size and head-position and the location of the airbag all from within the same image (obtained by novel selection of combination of sensor technology, location of sensor, and image processing) means that secondary sensors, for example, seat position and steering rake and reach, are not required. This provides cost saving and greatly simplifies wiring required in the vehicle.

A first algorithm for processing the images shown in Figure 3 images A-F is shown in Figure 4, and has the following steps:
Step 1: The reference image Iref (image A) is either calculated by averaging a number of frames over a period of time, or is taken from a memory store. For example, in an airbag control application, a series of images may be taken over a short period of time, e.g. a fraction of a second, when the driver operates the door lock on approaching the vehicle. In case of a scene where object are moving, e.g. people in a shopping mall, the effect of any one individual is reduced if the averaging is done over a period of several minutes, for example.
Step 2: Take current image Inow" (image B). This is the entry point into an infinite loop which may be broken by a reset signal should there be a build up of errors; in which case the algorithm would be restarted. The current image not provided outside of the device but used solely by the internal pre-processing algorithm.
Step 3: Calculate modulus of difference image" (image C). The latest image from the camera is subtracted, pixel by pixel, from the reference image, and any negative results are converted to positive numbers by multiplying by -1. The result is a positive image which is noise except where objects have moved in the scene.
Step 4: The noise in the background is identified as unstructured shapes of low amplitude. Structure shapes with higher signal represent areas where an object is present. Structure and noise detection algorithms can be used to create a binary mask image (image D) which labels each pixel in the image from step 3 as either object or background. The present algorithm is also applicable when used in say a shopping mall where there may be a number of separate areas, rather than a single contiguous area formed e.g. by a seat occupant. Mask images may be output by the sensor after step 4 to provide silhouette information. This may be useful if privacy needs to be preserved, e.g. intruder detection system with monitoring by security staff. The mask images may be used to estimate body mass of occupant from the area of image occupied, e.g. by counting pixels in the mask image. The sensor may be used in conjunction with weight sensor in the vehicle's seat to improve accuracy in estimating body mass,
Step 5: Sub-images (image E) are created by masking the input image Inow with the mask image, and the co-ordinate position of each sub-image is calculated. These sub-images and their co-ordinates can now be communicated by the device to subsequent processing systems.
Step 6: The background reference image Iref (image A) needs to be regularly updated. One means of achieving this is by computing a long term average of the Inow images.

Other, more complex, methods may also be employed to improve performance in more dynamically changing environments.

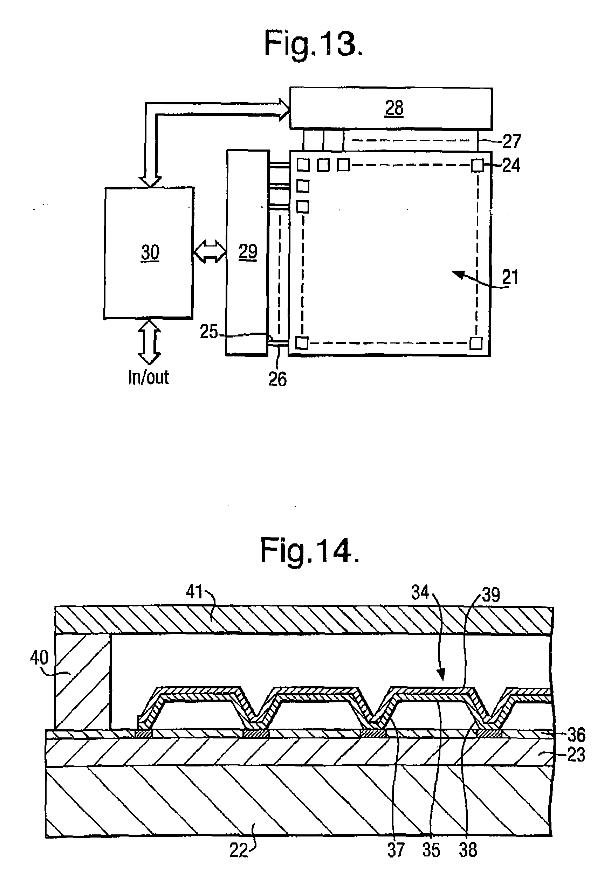

The above algorithm of Figure 4 may be readily written in computer code by those skilled in the art and stored on suitable media, for example in a memory chip on, or integral with, the array of Figures 13 and 14.

The algorithm of Figure 4 may be used in other detector arrays; the arrays may be in any type of conventional camera generating a 2D image, and may operate in the visible, infrared or thermal wavebands. This provides an enhanced product for the following reasons:

Normal camera systems provide full frame imagery of the area being viewed, regardless of the scene being observed. A device according to an aspect of this invention comprises a camera and pre-processing algorithm which instead of generating imagery in the normal manner only outputs a sequence of subimages that show new objects in the scene and their location within the scene.

For example, such a device might be used to monitor an office. In an empty office the camera generates no output whatsoever. When an office worker enters the office, the device generates a sequence of subimages of the worker moving around the office, along with positional information.

This device provides the following advantages: when no new object is in the observed area, no data is generated by the camera, so there is no data processing overhead or power consumption by subsequent image processing or encoding systems. Also, when a new object is in the observed area, the only data output is the (x,y) position of the object in the image co-ordinate system, and a sub-image, or "cut-out" of the object. This cut-out does not alter the grey levels, or colour levels, of the original image and so any subsequent image-recognition or pattern processing can be used to recognise or classify and track the object. Also, the cut-out does not contain any background.

The binary mask generated can also be inverted such that the resultant cut-out shows only the background and not the individuals within a room. This maybe useful for tasks such as prison cell monitoring where the operator wishes to see that the room is intact and the prisoners are in the their normal positions, but protects their privacy.

Another application is home intruder system monitoring, where an alarm receiving centre may need to view the activities within a room to confirm that a burglary is underway, but the customer wants his privacy protected.

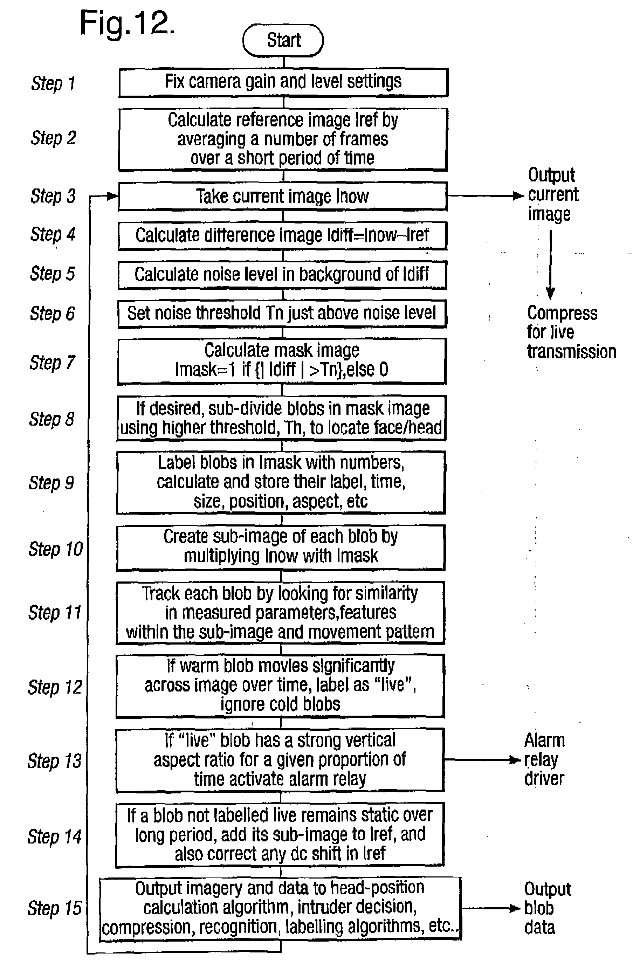

Another algorithm for obtaining the position of a person's head from the collective output of each detector in the array is detailed in Figure 12. Steps 1 to 15 are listed. The output after step 3 may be used in setting up the sensor to exclude areas in a car not required to be processed. The step 3 output may be observed on e.g. a liquid crystal display of a computer which is then used to selectively switch out some of the detectors in the array. For the case of head position sensing, the potential output after step 13 is unnecessary; only the output of step 15 is used to communicate e,g. to an airbag controller which needs to know head position in order to compute proximity to an airbag opening.

The processing steps of the algorithm Figure 12 are as follows:

The purpose of the following algorithm is to identify from thermal imagery objects of interest. Primary application areas are likely to be head-position sensing for airbag control, requiring head-position sensing, and intruder detection for burglar alarms requiring discrimination between people, pets and spider and insects, as well as rejecting inanimate objects.

Step 1: Fix camera gain and level settings; this allows the imager to automatically adjust the gain of the camera to provide sufficient contrast detail within the image and sets the level to ensure that the average grey level in the image is close to a mid value. There are a number of ways to set the exposure automatically, but the important point here is that once the gain and level settings have been calculated that they are fixed. This means that the grey levels of the scene will only change if their temperature changes, rather than as a result of the variation of a gain and level control. Fixing the gain and level permits image arithmetic to be undertaken later without introducing uncontrolled errors.

Step 2: Calculate reference image Iref by averaging a number of frames over a short period of time. This step allows the unit to calculate a reference image, which is low in noise. Averaging a number of frames over a given time reduces the time-varying pixel-independent noise. The arithmetic operations later will benefit from reduced noise level in the reference image. For example, in an airbag control application, a series of images may be taken over a short period of time, e.g. 1 second, when the driver operates the door lock on approaching the vehicle. In case of a scene where object are moving, e.g. people in a shopping mall, the effect of any one individual is reduced if the averaging is done over a period of 1 minute, for example. It does not matter if there is a stationary individual, as the remainder of the algorithm will correct for such cases.

Step 3: Take current image Inow. This is the entry point into an infinite loop which may be broken by a reset signal should there be a build up of errors. Reset would be activated either by key (e.g. automotive door lock, setting burglar alarm) or by a watchdog circuit monitoring the behaviour of the system, or simply at power-up. The loop may operate at around normal TV frame rates, e.g. 25-30Hz, or at any other desired frequency depending on the application requirement. The maximum frequency of the system is determined by thermal time constants of the detector array, and could be several hundred Hertz. There is no lower frequency limit. Live imagery can be provided at this stage to a display device through an output port. Such imagery may be required for example for manual verification purposes in the intruder alarm industry. The image is small, 64x64 pixels, 8 bits = 32768 bits. This could be heavily compressed, for example at a ratio of 20:1, giving 1.6k bits/second. At 30 frames per second, the total data rate is 49k bits per second, Live imagery at full spatial resolution could therefore be transmitted down a conventional telephone line (capacity 56kbit/sec) to an alarm receiving centre.

Step 4: Calculate difference image Idiff = Inow - Iref. The latest image from the array is subtracted from the reference image. If a person has entered the field of view and is warmer than the background (as is typically the case), then the difference image will show a warm object against a noise background. If an inanimate object has been moved, e.g. a door, then the image will show a static change, which will persist over a period of time. This step has identified the location of moving or shifted objects.

Step 5: Calculate noise level in background of Idiff. The low level of noise in the background should be removed, but as the gain settings and characteristics of the environment may be unknown, before thresholding is performed, it is beneficial to characterise the noise. This can be done using standard statistical approaches, and an optimum threshold set to remove all background noise.

Step 6: Set noise threshold Tn just above noise level. This is self-explanatory.

Step 7: Calculate mask image Imask = 1 if {|Idiff| > Tn}, else 0. By looking at each pixel I the difference image in turn and considering whether the size (or modulus) of grey level is greater than the threshold set, the corresponding pixel in Imask can be set to equal 1 or 0. The areas in I mask that equal 1 thus represent locations where there has been a movement, or a change of some other sort, e.g. heater coming on.

Step 8: If desired, subdivide blobs in mask image using higher threshold, Th, to locate face/head. For a head position detection system, it is not sufficient to locate the whole body. Using a higher threshold permits warmer objects in the image to be separated out. This will normally be bare skin rather than clothed areas.

Step 9: Label blobs in Imask with numbers, calculate and store their label, time, size, position, aspect, etc. Each separate labelled area in the mask image needs to be identified and tracked between frames. A numeric label serves to identify the blob and measurements made on the blob are stored for later retrieval and comparison.

Step 10: Create sub-image of each blob by multiplying Inow with Imask. The blobs characterised in step 9 were effectively, silhouettes. This step takes the grey levels from the input image Inow and copies them onto the masked area. Visually, this provides images which are cut-outs of the original Inow image, but the image only contains grey level detail so the object may be recognised.

Step 11: Track each blob by looking for similarity in measured parameters, features within the sub-image, and movement pattern. In order to determine whether an object has moved across the image, it has to be tracked between subsequent frames.

Step 12: If a warm blob moves significantly across image over time, label as 'live', ignore cold blobs. Warm moving objects (people and animals) are of particular interest; hence an additional label is used to identify these. Cold blobs may be created by insects and spiders or moving furniture, etc, which are not of interest and so these are ignored.

Step 13: If 'live' blob has a strong vertical aspect ratio for a given proportion of time activate alarm relay. The information already gathered and analysed can be used to provide an indication that an intruder has entered a room if the invention is used as an intruder detector. A dedicated output pin is provided to drive a transistor or relay circuit allowing immediate use of the invention as an intruder detector in existing alarm installations.

Step 14: If a blob not labelled 'live' remains static over a long period, add its subimage to Iref, and also correct any dc shift in Iref. Objects such as opened doors generate a difference between the reference image but are not of interest. If such blobs remain static over a long period of time, e.g. many minutes, then they can they can be removed from all further processing by incorporating their sub-image into the reference image by addition. The dc level of the background image area is monitored to track changes in room temperature, for example, and a dc maybe applied to correct for these.

Step 15: Output imagery and data to head-position calculation algorithm, intruder decision, compression, recognition, labelling algorithms, etc. A data port is provided to communicate results of the built-in algorithms to extemal processors or electronics. These may be of value, for example, to an airbag controller which needs to know head position in order to compute proximity to an airbag opening.

The above algorithm may be readily written in computer code by those skilled in the art and stored on suitable media, for example in a memory chip on, or integral with, the array of Figures 13 and 14.

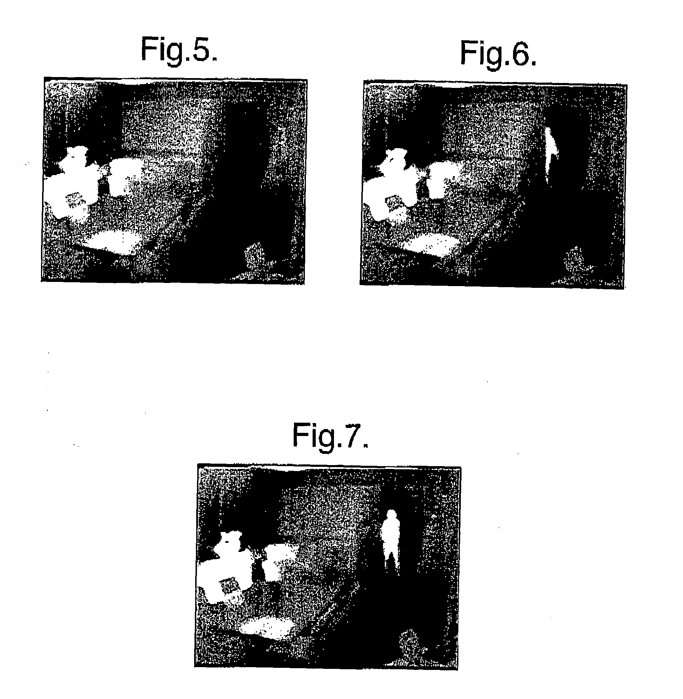

The power of the process of Figure 12 to detect a persons head is illustrated by examination of Figures 5 to 11 which are thermal images of the inside of a room.

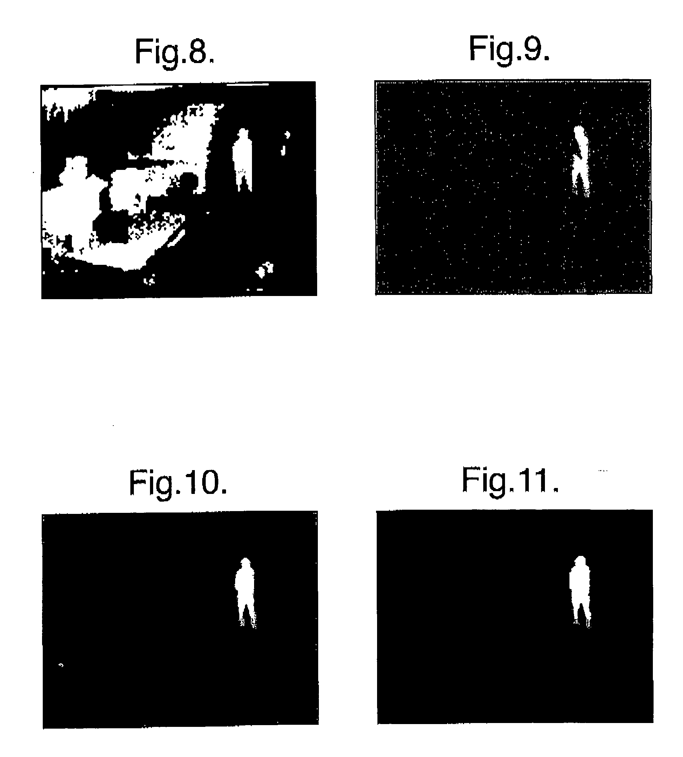

Figures 5-7 show three different time sequence frames of thermal images in a typical office. Common to all three are various hot objects e.g. radiators computers etc. Figures 6, 7 show a person entering the room. Conventional algorithms for detecting a person entering a room would use grey level thresholding to find warm objects and detect movement by differencing sequential frames. Figure 8 shows the effect of simple grey level thresholding; the threshold level used to separate the individual from the local background is too low to eliminate the clutter objects. If the threshold is raised then the person will gradually be thresholded out as the warmest object in the room is the radiator.

Figure 9 shows the effect of image differencing. The image differencing approach is very effective at removing static objects such as radiators but, unfortunately, affects the image of the intruder. Instead of seeing the intruder as a whole, the differencing operation creates a strange effect.

The algorithm of Figure 12 does not suffer from either of these problems, but provides a clear "cut out" of the intended object allowing him to be recognised from the thermal signature as shown in Figure 11. It also rejects objects which are moved into the monitored area but are clearly inanimate.

The intermediate image shown in Figure 10 is the result of the background subtraction.

The Figure 10 image is the difference between the reference image and the current image, and the Figure 11 image is one where the noise has been thresholded out and the resulting mask used to key the current image.

The image of Figure 11 is clearly a human and measurement of height and width to calculate aspect ratio is trivially easy. Other shape information, is clearly visible, and information within the shape is also available for recognition algorithms to operate on.

Details of one suitable thermal camera array are as shown in Figures 13, 14. A thermal imaging array 21 comprises a base plate 22 of silicon onto which circuitry 23 such as amplifiers gates etc are grown. The array 21 has 4096 detectors arranged in a 64 x 64 array. Each detector 24 has associated therewith two row electrodes 25, 26 and a column electrode 27 for applying voltages to and reading output from each detector 24. All row electrodes 25, 26 are operated through a row driver 28, and all column electrodes 27 are operated through a column driver 29. Both driver's are controlled by a control circuit 30 which communicates to external circuitry not shown.

Each detector 24 may be made as described in WO/GB00/03243. In such a device a micro bolometer 34 is formed as a micro-bridge 35 in which a layer of e.g. titanium is spaced about 1 to 2µm from a substrate surface 36 by thin legs 37, 38. Typically the titanium is about 0.1 to 0.25µm in a range of 0.05 to 0.3µm with a sheet resistance of about 3.3Ω/sq. in a range of 1.5 to 6Ω/sq. The detector microbridge 35 is supported under a layer 39 of silicon oxide having a thickness of about λ/4 where λ is the wavelength of radiation to be detected. The titanium detector absorbs incident infra red radiation (8 to 14µm wavelength) and changes its resistance with temperature. Hence measuring the detector resistance provides a value of the incident radiation amplitude.

The detectors 34 are all contained within an airtight container with walls 40 and a lid 41 forming a window or a lens, The walls 40 may be of silicon oxide and the window 41 of germanium, silicon, or a chalcogenide glass. Typically the pressure inside the container is less than 10Pa.

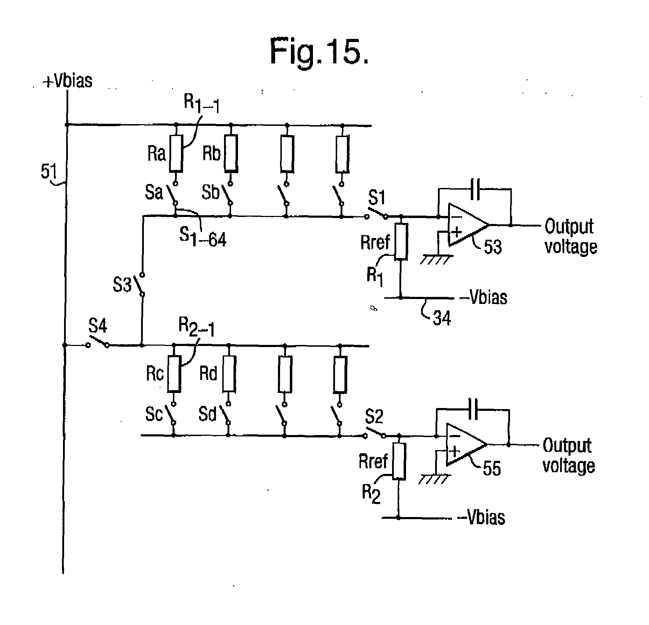

Figure 15 shows how each detector may be readout. Two lines are shown. A first line of detectors is indicated by resistances R₁₋₁ to R₁₋₆₄ each connected at one end to a +V bias electrode 51. The other ends of the resistances are connectable through switches S₁ - S₆₄ to a readout electrode connected through a switch S1 to one end of a reference resistance R1 and to an integrating capacitor amplifier 54. The reference resistance R1 is connected to a negative bias voltage of equal amplitude to the +V bias.

Similarly, the second line of detectors has resistances R₂₋₁ to R₂₋₆₄ connect via switches S₂₋₁ to S₂₋₆₄, and S2 to an integrating capacitor amplifier 55, and reference resistance R2. Further switches S3 and S4 allow different combinations of connections.

A thermal scene is read by allowing each detector 34 to be illuminated by the scene through the window or lens 41. This thermal radiation increases the temperature of each detector and hence varying its resistance value. Each detector in the first line is , then connected in turn, via switches S₁ - S₆₄, to the amplifier 54 for an integration time. The amplifier output voltage is thus proportional to the temperature of each detector. Similarly all other lines are read out. The collective output of all detectors gives an electrical picture of the thermal scene.

The x, y array is preferably a 64x64 array although other values of x and y in the range of 24 to 96 may be chosen. Most preferably x and y have the values of 32, or 64, so that simple binary circuits can be used. Typically x and y are about 64, although say 62 may be used with two redundant lines left for other purposes such as timing markers or reference resistbrs.

Use of 64 by 64 arrays matches well to the human fovea. The high-resolution patch in the eye (the fovea) covers about 2 degrees of the centre of the field of vision. In this high-resolution patch, the resolution is around 1 arc minute; 1 arc minute resolution represents 20:20 vision. So for 20:20 vision, the fovea could be filled by an image of 120x120 pixels, say 128x128 (for convenience) when the display is at a comfortable distance from an observer. If this is reduced down to 64x64 pixels to represent less than perfect vision, then the present invention can be observed as a workable display. Moving images, however, contain additional information, and may be recognisable at 32x32, but only just.

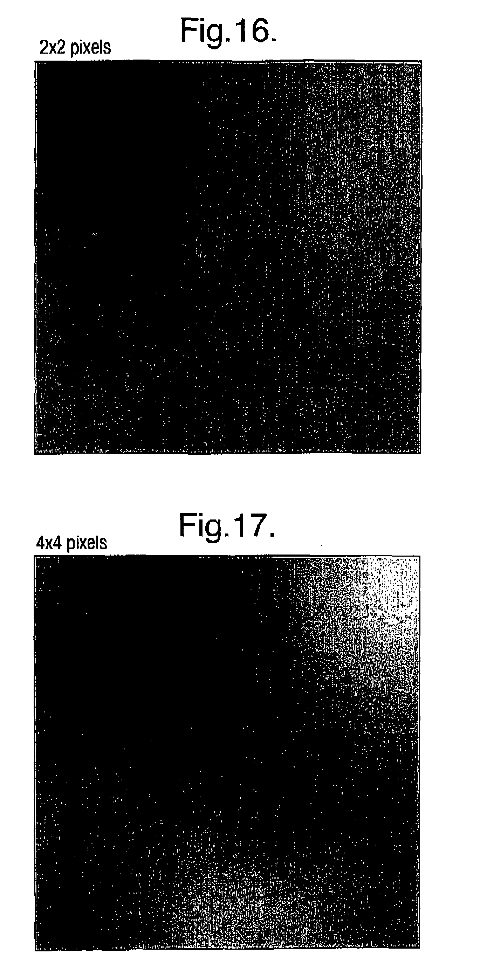

The value of choosing about 64 x 64 arrays is explained with reference to Figures 16 to 23 which show pictures of one thermal scene. Minimising array size keeps down costs of raw materials and image processing circuitry thus providing a highly competitive product.

Figure 16 shows a picture of the thermal scene taken by a 2 x 2 detector array; nothing useful can be observed.

Figure 17 shows a picture of the thermal scene taken by a 4 x 4 detector array; except for two lighter areas at the top and bottom, nothing useful can be observed.

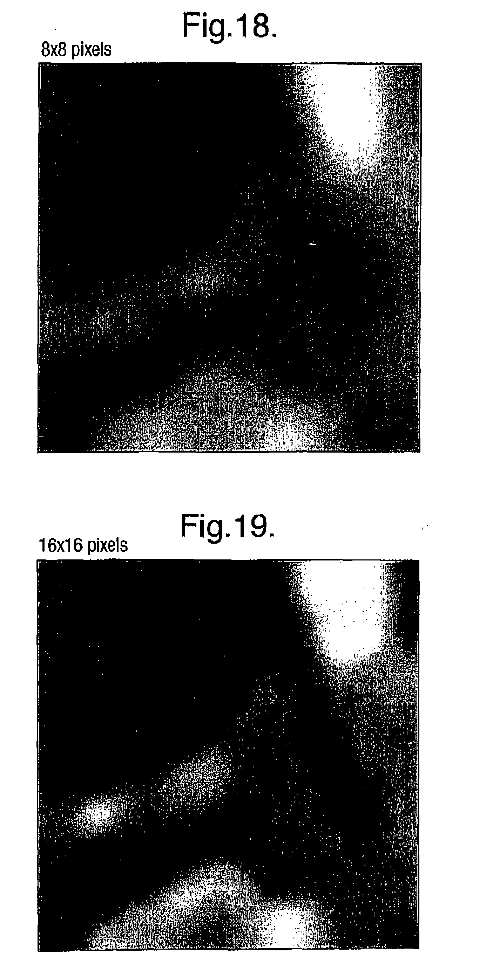

Figure 18 shows a picture of the thermal scene taken by an 8 x 8 detector array; separate areas of light and dark can be distinguished but without foreknowledge little useful can be observed.

Figure 19 shows a picture of the thermal scene taken by a 16 x 16 detector array; this is an improvement on the 8x8 array but no details are distinguishable.

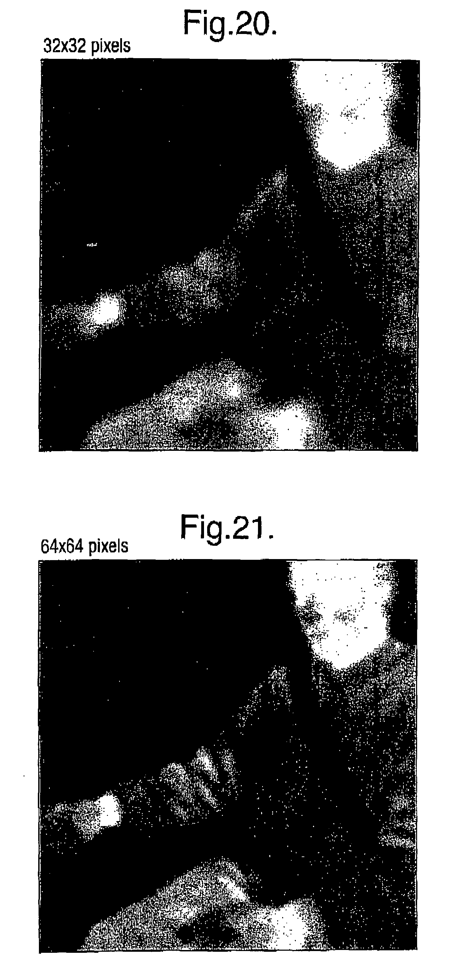

Figure 20 shows a picture of the thermal scene taken by a 32 x 32 detector array. In this sufficient detail is available to show an operator sitting in a car wearing a seat belt, but the face is blurred.

Figure 21 shows a picture of the thermal scene taken by a 64 x 64 detector array. In this the picture is sufficiently clear to identify facial features of the operator and details of his clothing.

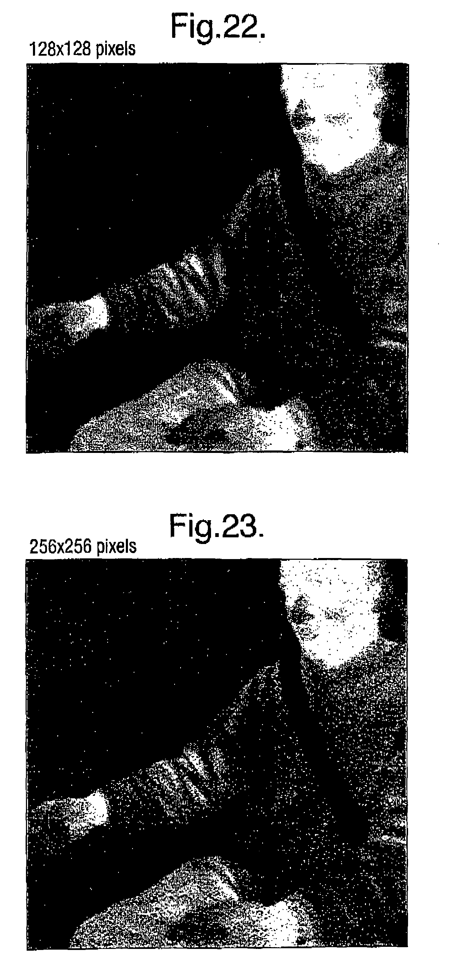

By way of comparison, Figure 22 and 23 show a picture of the thermal scene taken by a 128 x 128 and a 256 x 256 detector arrays respectively. Both these show more detail than the 64 x 64 array but the improvement is marginal and not worth the extra complexity and cost.

Using the information from the 64 x 64 array of Figure 21 the operators head position relative to a steering wheel can be determined. As seen the operator is sitting back whilst driving, rather than e.g. leaning forward to adjust a radio. In the first case normal operation of the steering wheel air bag is safe, whilst in the second case full operation of the steering wheel air bag is unsafe.

## Claims

1. A method of identifying objects of interest within a scene from an image thereof, the method comprising the steps of
(i) taking a current image of the scene I_{now} using an imager,
(ii) calculating a difference image I_{diff} between the current image of the scene I_{now} and a reference image I_{ref}, the difference image I_{diff} comprising a plurality of image pixels each having an intensity level,
(iii) determining an optimum noise level in the difference image I_{diff} and setting a noise threshold Tₙ above said optimum noise level,
(iv) comparing the magnitude of the intensity level of each pixel within the difference image I_{diff} with the noise level Tₙ and providing a binary mask image Iₘₐₛₖ which labels continuous areas of pixels (blobs) in the image as either object or background.

2. A method according to claim 1 comprising the additional step of
(v) comparing the magnitude of the intensity level of each pixel within continuous areas of pixels (blobs) identified as object with a higher threshold Tₕ and subdividing said continuous areas of object pixels (blobs) according to whether the intensity level of each pixel there-within is greater than or less than the threshold level Tₕ.

3. A method according to claim 1 or 2 comprising the additional step of labelling separately each continuous area of pixels (blob) identified as object within the binary mask image Iₘₐₛₖ.

4. A method according to claim 3 comprising the step of determining and storing for each labelled continuous area of object pixels (blob) at least one of a time, a size, a position and an aspect associated therewith,

5. A method according to any of the preceding claims comprising the step of providing a plurality of sub-images, each consisting of a portion of the current image of the scene I_{now} corresponding with a continuous area of object pixels (blob) within the binary mask Image Iₘₐₛₖ by multiplying the current image of the scene I_{now} with the binary mask image Iₘₐₛₖ.

6. A method according to any of the preceding claims wherein the imager has adjustable gain and level settings, the method comprising an initial step of fixing the gain setting on the imager so as to provide sufficient contrast detail within the image of the scene and fixing the level setting on the imager such that the average grey level in the image of the scene is substantially a mid value.

7. A method according to any of the preceding claims comprising an intermediate step of taking a plurality of images of the scene over a period of time and calculating the reference image I_{ref} by averaging said plurality of images.

8. A method according to any of the preceding claims wherein the step of calculating the difference image I_{diff} includes the step of calculating the modulus of the difference between the current image of the scene I_{now} and a reference image I_{ref}.

9. A method of tracking at least one object of interest within a scene comprising the steps of
(i) taking a plurality of images of the scene I_{now} using an imager,
(ii) performing the method of claim 5 on subsequent images within said plurality of images of the scene I_{now} so as to provide a plurality of sub-images there-from,
(iii) comparing subsequent sub-images and tracking each continuous area of object pixels (blob) by looking for similarity in at least one of measured parameters, features within the sub-image and movement pattern, and
(iv) labelling as 'live' each continuous area of object pixels (blob) which moves substantially across the image over time.

10. A method according to claim 11 comprising the step of identifying any continuous area of object pixels (blob) not labelled as 'live' which remains substantially static over a period of time and adding the sub-image corresponding with said identified continuous area of object pixels (blob) to the reference image I_{ref}.

11. A method according to claim 9 or 10 of detecting an intruder comprising the steps of analysing each continuous area of object pixels (blob) labelled as 'live' and activating an alarm in the event that any of said 'live' areas have a substantially vertical aspect ratio for a given proportion of time.

12. A method according to claim 9 or 10 of providing information to control safety airbags in a vehicle having controls for deployment thereof, the method comprising the further step of outputting a signal indicative of the head position of an occupant of the vehicle to said controls.

13. A method according to any of the preceding claims wherein the current image of the scene I_{now} and the reference image of the scene I_{ref} both comprise thermal images thereof.

14. A head position sensor for use in a vehicle in conjunction with controls for deployment of safety restrain airbags comprising;
a two-dimensional array of thermal infra red detectors,
a lens system for imaging a seat occupant and a location of at least one airbag, and
a processor adapted in use to determine the existence of an occupant in a seat and the position of the occupant's head relative to at least one airbag using the method of claim 12.
